# EUROPEAN PATENT SPECIFICATION

(11) **EP 4 527 806 B1**
(45) Date of publication and mention of the grant of the patent: **01.04.2026**
(21) Application number: 24020277.0
(22) Date of filing: 29.08.2024
(51) Int. Cl.: C02F 1/52, C02F 1/56, C02F 101/20

(54) **PROCESS FOR THE TREATMENT OF FILTER BACKWASH WATER**
VERFAHREN ZUR BEHANDLUNG VON WASSER AUS DER FILTERRÜCKSPÜLUNG
PROCÉDÉ DE TRAITEMENT DES EAUX DE RÉTROLAVAGE DES FILTRES

(30) Priority: 31.08.2023 PL 44597523
(43) Date of publication of application: 26.03.2025
(73) Proprietor: Uniwersytet Mikolaja Kopernika w Toruniu, 87-100 Torun (PL)
(72) Inventor: Macczak, Piotr, 99-300 Kutno (PL); Kaczmarek, Halina, 87-100 Torun (PL)

(56) References cited:
- CN-B- 102 276 038
- MACCZAK PIOTR ET AL: "Application of Chitosan and Its Derivatives as Bioflocculants for Iron and Turbidity Removal from Filter Backwash Water", WATER, vol. 15, no. 16, 12 August 2023 (2023-08-12), CH, pages 2913, XP093243112, ISSN: 2073-4441, DOI: 10.3390/w15162913
- MACCZAK PIOTR ET AL: "The Use of Chitosan and Starch-Based Flocculants for Filter Backwash Water Treatment", vol. 15, no. 3, 1 January 2022 (2022-01-01), pages 1 - 21, XP093206165, ISSN: 1996-1944, Retrieved from the Internet <URL:https://www.mdpi.com/1996-1944/15/3/1056> [retrieved on 20250124], DOI: 10.3390/ma15031056
- SPYCHAJ TADEUSZ ET AL: "Carboxymethyl starch with high degree of substitution: synthesis, properties and application", POLIMERY, vol. 58, no. 7-8, 1 January 2013 (2013-01-01), pages 503 - 511, XP093206169

## Description

The subject of the invention is the method of purifying technological water containing a high concentration of iron ions (up to 50 mg/dm³) which remains after rinsing filters applied in underground water treatment.

Underground water drawn for municipal purposes is largely polluted with mineral compounds containing metal ions, primarily iron ions. Such compounds give undesirable color and high turbidity of water. Therefore, water undergoes a filtration process in which during filters rinsing technological waters, also called backwash waters, remains and which is further purified. In practice, for this purpose, coagulation and flocculation are used more and more often. The processes allow the destabilization and aggregation of particles suspended in water, which can be further removed from water by sedimentation. In these processes, inorganic coagulants in the form of aluminum or ion salts as well as organic flocculants, predominantly polyacrylamide flocculants, are most often used. The application of synthetic polymers raises serious doubts concerning safety, basically due to the possibility of secondary pollution of water with monomers, some of which have neurotoxic, others - carcinogenic properties (World Health Organization. Guidelines for Drinking-Water Quality: Fourth Edition Incorporating the First Addendum; World Health Organization: Geneva, Switzerland, 2017; pp. 307-308).

Natural polymers constitute an alternative, for example starch, i.e. a non-toxic biodegradable polysaccharide which is a storage material in various plants. The widespread availability of this polymer together with its desirable properties such as the presence of numerous functional groups and ease of modification make starch a very interesting option as a flocculant. The first reports of its use were already published in the 1960s. In the American patent US3397953, a mixture of starch and polyacrylates was employed for the flocculation of iron hydroxides suspension. Over the following years, patents concerned mainly the use of starch copolymers grafted with polyacrylamide (US3669915; CN105061675; PL239147). Such an approach does not eliminate the risk of environment recontamination with acrylic monomers completely.

There is a range of applications for carboxymethylated starch (CMS), for example in medicine, as a dressing material (PL238290; PL238962), or in the form of biodegradable foils soluble in water potentially applicable in food industry as edible foils, or in packaging industry (PL235282; PL233948). However, in the patent literature, there are no reports of its use in the treatment of technological water from filters rinsing.

Macczak et al. ("Application of Chitosan and Its Derivatives as Bioflocculants for Iron and Turbidity Removal from Filter Backwash Water", WATER, vol. 15, no. 16, 2023, p. 2913) discuss the use of chitosan derivatives for removing iron from filter backwash water. Moreover, the treatment of such water streams is also described with regard to chitosan and starch based flocculants in another article by Macczak et al. ("The Use of Chitosan and Starch-Based Flocculants for Filter Backwash Water Treatment", materials, vol. 15, no. 3, 2022, p. 1-21). However, those publications do not disclose the use of carboxymethylated corn starch (CMS).

The aim of the invention is to develop a method of conducting the technological water flocculation process in which the application of the flocculant based on carboxymethylated corn starch (CMS) will allow the reduction of the iron ions content in treated water. The use of a biopolymer (i.e. modified starch, CMS), enables a successful flocculation of metal compounds, in particular iron compounds, and at the same time, it will be produced of a cheap, natural raw material that will not constitute an additional burden to the environment. The use of CMS in the form of an aqueous solution is another advantage because it influences the ease of its application in the water treatment process.

The method of technological water treatment remaining after rinsing filters in the flocculation process with carboxymethylated corn starch is characterized in that 1 mg/dm³ of Al³⁺ ions in the form of polyaluminum chloride is added to an aqueous suspension containing from 25 to 50 mg/dm³ of iron ions per each 1 dm³ preferably 30.91 mg/dm³ and stirred, next from 0.10 to 2ml preferably 0.20 ml of the 0.10% (w/ w) aqueous solution of carboxymethylated corn starch is added, constituting from 0.10 to 2mg/dm³ preferably 0.20 mg/dm³ in terms of dry weight, and stirred at the rate of 250 rpm for 60 seconds, and stirred again at the rate of 25 rpm for 15 minutes, and the thus prepared suspension is subject to sedimentation for 30 minutes using commonly known methods. Preferably the 0.10 % (w/w) aqueous solution of carboxymethylated corn starch is used as the flocculant. Preferably fast stirring is performed for 60 seconds at the rate of 250 rpm. Preferably slow stirring is performed for 15 minutes at the rate of 25 rpm.

In the flocculation process of technological water i.e. a colloidal suspension of metal hydroxides, prevalently iron hydroxides carboxymethylated starch in the form of a 0.1% (w/w) aqueous solution is applied. Due to the etherification reaction of alkalized starch with monochloroacetic acid, carboxymethyl starch (CMS) is produced, i.e. a biodegradable starch derivative in the structure of which hydroxyl groups were replaced with carboxymethyl groups. The applied carboxymethylated starch is at the 39,47% degree of substitution (DS).

The conditions under which the process is conducted were chosen based on the Jar Test laboratory procedure that simulates the conditions under which coagulation/flocculation process is conducted in the technological system for backwash water treatment. 1 mg/dm³ of Al³⁺ ions in the form of chlorides is added to water containing from 25 to 50 mg/dm³ of iron ions and stirred for 30 seconds, next from 0.1 to 2.0 mg/dm³ of carboxymethylated starch in terms of dry weight, preferably 0.2 mg/dm³ is added and stirred for 60 seconds at the rate of 250 rpm, and then stirred for 15 minutes at the rate of 25 rpm and undergoes a sedimentation process for 0.5 h. The applied process parameters allowed the choice of the optimum bioflocculant (CMS) dose - 0.2 mg/dm³, which was comparable to the dose used in the case of synthetic polyacrylamide flocculants and which gave better results in removing iron ions from water - almost 99% reduction of iron ions content from technological water.

The subject of the invention is illustrated by the following examples.

Example I. 1 mg/dm³ of Al³⁺ ions in the form of polyaluminum chloride was added to 1 dm³ of an aqueous suspension containing 30.91 mg/dm³ of iron ions and stirred for 30 seconds, next 0.10 ml of 0.10% (w/w) of the aqueous solution of CMS was added which constituted 0.10 mg/dm³ in terms of dry weight, and stirring was continued at the rate of 250 rpm for another 1 minute, and then stirred at the rate of 25 rpm for another 15 minutes. The flocculation suspension was subject to sedimentation. A sample of the solution above the sediment was collected and the concentration of the iron ions was determined. The concentration of the iron ions in the suspension after flocculation was 0.85 mg/dm³. As a result of the example, the reduction of iron ions content in technological water amounted to 97.25%.

Example II. 1 mg/dm³ of Al³⁺ ions in the form of polyaluminum chloride is added to 1 dm³ of the suspension according to Example I and stirred for 5 seconds, next 0.20 ml of 0.10% (w/w) of the aqueous solution of CMS was added which constituted 0.2 mg/dm³ in terms of dry weight, and stirring was continued at the rate of 400 rpm for another 30 seconds, and then stirred for another 15 minutes at the rate of 15 rpm. The flocculation suspension was subject to sedimentation. A sample of the solution above the sediment was collected and the concentration of the iron ions was determined. The concentration of the iron ions in the suspension after flocculation was 0.32 mg/dm³. As a result of the example, the reduction of iron ions content in technological water amounted to 98.96%.

Example III. 1 mg/dm³ of Al³⁺ ions in the form of polyaluminum chloride is added to 1 dm³ of the suspension according to Example I and stirred for 120 seconds, next 0.50 ml of 0.10% (w/w) of the aqueous solution of CMS was added which constituted 0.5 mg/dm³ in terms of dry weight, and stirring was continued at the rate of 100 rpm for another 1 minute and then stirred for another 120 seconds at the rate of 35 rpm. The flocculation suspension was subject to sedimentation. A sample of the solution above the sediment was collected and the concentration of the iron ions was determined. The concentration of the iron ions in the suspension after flocculation was 0.67 mg/dm³. As a result of the example, the reduction of iron ions content in technological water amounted to 97.83%.

## Claims

1. The method of technological water treatment remaining after rinsing filters in the flocculation process with carboxymethylated corn starch **characterized in that** 1 mg/dm³ of Al³⁺ ions in the form of polyaluminum chloride is added to an aqueous suspension containing from 25 to 50 mg/dm³ of iron ions per each 1 dm³ preferably 30.91 mg/dm³ and stirred, next from 0.10 to 2ml preferably 0.20 ml of the 0.10% (w/w) aqueous solution of carboxymethylated corn starch is added, constituting from 0.10 to 2mg/dm³ preferably 0.20 mg/dm³ in terms of dry weight, and stirred at the rate of 250 rpm for 60 seconds, and stirred again at the rate of 25 rpm for 15 minutes, and the thus prepared suspension is subject to sedimentation for 30 minutes using commonly known methods.

2. The method according to claim 1 **characterized in that** 0.10 % (w/w) aqueous solution of carboxymethylated corn starch is used as the flocculant.

3. The method according to claim 1 **characterized in that** fast stirring is performed for 60 seconds at the rate of 250 rpm.

4. The method according to claim 1 **characterized in that** slow stirring is performed for 15 minutes at the rate of 25 rpm.

## Patentansprüche

1. Methode zur Reinigung von technologischem Wasser, das aus der Spülung von Filtern im Prozess der Flockung aus carboxymethylierter Maisstärke, **dadurch gekennzeichnet, dass** zu der wässrigen Suspension, die pro 1 dm³ aus Eisenionen zwischen 25 und 50 mg/dm³ 3 vorzugsweise 30,91 mg/ dm³ besteht, 1 mg/dm³ Al³⁺ Ionen in Form von Polyaluminiumchlorid hinzugefügt wird und diese dann gemischt wird, anschließend werden 0,10 bis 2 ml, vorzugsweise 0,20 ml, 0,10 % (w/w) wässriger Lösung carboxymethylierter Maisstärke hinzugefügt, die 0,10 bis 2 mg/dm³, vorzugsweise 0,20 mg/dm³ darstellt, umgerechnet in Trockenmasse, und diese mit einer Drehzahl von 250 U/Min. während einer Zeit von 60 Sekunden gemischt wird, und anschließend erneut gemischt wird, mit einer Drehzahl von 25 U/Min. während einer Zeit von 15 Minuten, und die so erhaltene Suspension der Sedimentierung für eine Zeit von 30 Minuten mit bekannten Verfahren unterzogen wird.

2. Die Methode nach Anspruch 1, **dadurch gekennzeichnet, dass** als Flockungsmittel 0,10 % (w/w) wässrige Lösung von carboxymethylierter Maisstärke verwendet wird.

3. Die Methode nach Anspruch 1, **dadurch gekennzeichnet, dass** das schnelle Mischen während einer Zeit von 60 Sekunden mit einer Drehzahl von 250 U/Min. durchgeführt wird.

4. Die Methode nach Anspruch 1, **dadurch gekennzeichnet, dass** das langsame Mischen während einer Zeit von 15 Minuten mit einer Drehzahl von 25 U/Min. durchgeführt wird.

## Revendications

1. Procédé de traitement de l'eau technologique provenant du rinçage des filtres dans un procédé de floculation avec de l'amidon de maïs carboxyméthylé, **caractérisé en ce que** dans une suspension aqueuse contenant, pour 1 dm³ des ions fer en une quantité comprise entre 25 et 50 mg/dm³, de préférence 30,91 mg/dm³, on ajoute 1 mg/dm³ d'ions Al³⁺ sous forme de chlorure de polyaluminium et on mélange ; puis on ajoute de 0,10 à 2 ml, de préférence 0,20 ml, d'une solution aqueuse 0,10 % (m/m) d'amidon de maïs carboxyméthylé, ce qui correspond à 0,10 à 2 mg/dm³, de préférence 0,20 mg/ dm³ en matière sèche, et on mélange à une vitesse de 250 tr/min pendant 60 secondes, puis à nouveau à 25 tr/min pendant 15 minutes ; et la suspension ainsi obtenue est ensuite soumise à une sédimentation pendant 30 minutes selon des procédés connus.

2. Procédé selon la revendication 1 **caractérisé en ce que** l'on utilise comme floculant une solution aqueuse 0,10 % (m/m) d'amidon de maïs carboxyméthylé.

3. Procédé selon la revendication 1 **caractérisé en ce que** le mélange rapide est effectué pendant 60 secondes à une vitesse de 250 tr/min.

4. Procédé selon la revendication 1 **caractérisé en ce que** le mélange lent est effectué pendant 15 minutes à une vitesse de 25 tr/min.
